(19) Europäisches Patentamt

European Patent Office

Office européen des brevets

(11) **EP 1 505 877 B1**

(12) **EUROPEAN PATENT SPECIFICATION**

(45) Date of publication and mention
of the grant of the patent:
**11.10.2006 Bulletin 2006/41**

(51) Int Cl.:
*A23D 9/013* (2006.01)   *A21D 13/08* (2006.01)
*A21D 2/16* (2006.01)

(21) Application number: **02716988.7**

(22) Date of filing: **25.03.2002**

(86) International application number:
**PCT/IB2002/001123**

(87) International publication number:
**WO 2003/079802 (02.10.2003 Gazette 2003/40)**

(54) **SHORTENING BASED EMULSIFYING FORMULATION FOR THE PREPARATION OF CAKES AND ITS METHOD**

EMULGIERENDE FORMULIERUNG AUF BACKFETTBASIS FÜR DIE ZUBEREITUNG VON KUCHEN UND VERFAHREN

FORMULE EMULSIFIANTE A BASE DE GRAISSE CULINAIRE POUR PREPARATION DE PATISSERIES ET PROCEDE DE PRODUCTION

(84) Designated Contracting States:
**AT BE CH CY DE DK ES FI FR GB GR IE IT LI LU MC NL PT SE TR**

(43) Date of publication of application:
**16.02.2005 Bulletin 2005/07**

(73) Proprietor: **COUNCIL OF SCIENTIFIC AND INDUSTRIAL RESEARCH**
**New Delhi 110 001 (IN)**

(72) Inventors:
• **RAJIV, Jyotsna**
**Mysore 570 013**
**Karnataka (IN)**
• **PRABHASANKAR, Pichan**
**Mysore 570 013**
**Karnataka (IN)**
• **INDRANI, Dasappa**
**Mysore 570 013**
**Karnataka (IN)**
• **RAO, Gandham, Venkateswara**
**Mysore 570 013**
**Karnataka (IN)**

(74) Representative: **Goodfellow, Hugh Robin et al**
**Carpmaels & Ransford,**
**43 Bloomsbury Square**
**London WC1A 2RA (GB)**

(56) References cited:
US-A- 3 914 453          US-A- 5 254 356
US-A- 6 017 388          US-A- 6 020 014

• "EMULSIFIER BLEND FOR CAKE MARGARINE AND CAKE MARGARINE WITH REDUCED FAT CONTENT" RESEARCH DISCLOSURE, KENNETH MASON PUBLICATIONS, HAMPSHIRE, GB, no. 333, 1992, page 10 XP000281122 ISSN: 0374-4353
• NASH N H ET AL: "Food emulsifiers - science and art." JOURNAL OF THE AMERICAN OIL CHEMISTS' SOCIETY 1972 PVO INTERNATIONAL, INC., 416 DIVISION STREET, BOONTON, NEW JERSEY 7005, USA, vol. 49, no. 8, pages 457-461, XP001109425
• RUSCH D T ET AL: "Statistical development of improved emulsification systems for bakers shortenings." JOURNAL OF THE AMERICAN OIL CHEMISTS' SOCIETY 1971 ATLAS CHEMICAL IND. INC., WILMINGTON, DELAWARE 19899, USA, vol. 48, no. 4, pages 173-177, XP001109424
• RUSCH D T: "Emulsifiers: uses in cereal and bakery foods." CEREAL FOODS WORLD 1981 FOOD INGREDIENTS DIV., PATCO PRODUCTS, DIV. OF C. J. PATTERSON CO., KANSAS CITY, MISSOURI, USA, vol. 26, no. 3, pages 110-113, 115, XP008011950 cited in the application

**Description**

**TECHNICAL FIELD**

The present invention relates to an emulsifier formulation for cakes and a method of its preparation.

**BACKGROUND ART**

The bakery industry in India has now occupied a significant place in industrial sector. It represents one of the largest organised food processing activities in the country. The bakery industry is a Rs.5, 000 crores turn over industry. The bakery industry produces a variety of products of to cater to all sections of population. The present production of cakes and pastries in India is estimated at about 400000 tonnes. The production is expected to go upto 800000 tonnes in the next 5 years (Vikas Singhal, 1999, Indian Agriculture, Indian Economic Data Research Centre, pp 72-83). The production of flour confectionery products, mainly varieties of cakes is about 375 thousand tonnes at present and it is estimated to increase to about 710 thousand tonnes by 2001 AD. There is a steady increase in the production and consumption of cakes especially those generally known as Tea cake/ Bar cake/Slice cake which are manufactured and marketed on large scale in packed form even by the medium scale baking units. Although cakes may differ substantially in their fat content, they are all definitely benefited by the incorporation of an emulsifier or a combination of emulsifiers. Extremes of fat addition to cakes are represented by pound cake on the one hand, and by sponge cake on other. Some formulas for pound cake require a weight of shortening equal to that of the flour or 100% in baker's terminology whereas sponge cake is made without any added shortening. Usually, the amount of fat in cake making ranges from 35 - 50% based on the flour in the formula. Despite the variations in shortening levels, all types of cakes, including sponge cake are improved by the action of emulsifiers. The term emulsifier is used to describe these ingredients because they all exhibit some ability to emulsify oil and water. However, in baked products and other cereal-based foods, emulsification is often of secondary importance. Starch complexing, protein strengthening and aeration are the primary functions of emulsifiers. Cereal based foods constitute the largest end-use group of application for emulsifiers. (David Rusch .T., 1981. Emulsifiers: Uses in Cereal and bakery foods, Cereals food world, 26(3): 111-115) Emulsifiers are important functional additives in modem food processing. Emulsifiers are surface active ingredients that can emulsify and stabilize emulsions and perform many diverse functions in food product development. With the growing economic importance of the sweet goods sector, including cakes, cookies, whipped toppings and icings there is a growing awareness of the need to develop emulsifiers to serve this group of products. As the needs of the sweet goods industry become more complex, ongoing technology and product development efforts have resulted in a wide range of emulsifiers. Ideal emulsifier meets to contribute to enhanced emulsification, aeration, foam stabilization and starch complexing. Monoglycerides are the most basic and predominant class of emulsifiers, both in terms of technical importance and in total usage, which by some accounts makes up 65-75% of total emulsifier usage. (Silva. R.F., 2000 Uses of alpha crystalline emulsifiers in the sweet goods industry. Cereal Foods World, 45(9): 405-410) Each bakery has its own way of preparation of emulsifiers. Most of the emulsifiers prepared are water based. Shortening based emulsifier system will have long shelf life than water based emulsifier system. The need of the hour for bakers would be the shortening based emulsifier system. The bakers' need is to be exploited and there is a good growth potential for the industries, which manufacture the cakes. Moreover, the emulsifier system can be useful to small as well as large scale bakeries.

Emulsification of fat in cake batter is one of the many functions of surfactant. Another characteristic of these additives is their ability to control crystal transformation of fats. They have ability to interact with starch and protein. They improve the shortening action of fat by increasing its spreadability on the starch granules and protein strands. In cakes, emulsifiers provide such quality improvement as large volume, finer grain and texture, a more tender crumb, improved eating quality, a higher degree of symmetry and extension of keeping quality (BirnbaumH., 1978 Surfactants and Shortenings in Cake making, The Baker's Digest, 28-38). There is no doubt that cake batter is an emulsion. Different emulsifiers such as polysorbate 65, polysorbate 80, sodium lauryl sulphate, sorbitan monosterate, polysorbate 60, monoglyceride citrate, calcium stearoyl -2-lactylate, diacetyl sodium sulfosuccinate, sodium stearoyl fumaerate, succinylated mono glycerides, sodium stearoyl lactylate, ethoxylated mono and diglycerides etc., will give different emulsion characteristics in the batter system. Most of the emulsifiers decrease the batter specific gravity except in the case of DMG for slight increase at low levels. In all cases, cake volumes improved. Del Vecchio. 1975. Emulsifiers and their use in soft wheat products. The Bakers Digest, 28-35, 52.

Reference may be made here to Mac Donald and Douglas Bly. 1966 Determination of optimal levels of several emulsifiers in cakes mix shortenings. Cereal Chemistry 43, 571-584) wherein four emulsifiers, monoglycerides (GMS), sorbitan monostearate (SMS), Polyoxyethylene (22), sorbitan monosteare (PBS-60) and glycerol lactopalmitate (GLP) were evaluated as emulsifiers for cake mix. Results obtained from application of response surface methodology approached maximal response when combinations of all four emulsifiers were used. The proportion of each emulsifier to be used in the combination is more precisely estimated by use of a simpler design. The application of the principles of evolutionary operation (EVOP) to experimental design is believed to be unique. The results appear to justify use of such methods to determine the optimal properties of components in complex mixtures as in mix formulation.

Reference may be made here to Kim and Walker 1992 Effect of sugars and emulsifiers on starch gelatinisation evaluated by differential scanning calorimetery Cereal Chemistry 69: 212-217 wherein Differential Scanning Colorimetery (DSC) is used to evaluate the effects of sugar and emulsifier interactions on gelatinzation temperatures of three different starches.

Reference may be made here to Pierce. M. M., and Walker. C. E., 1987 Addition of sucrose fatty acid ester emulsifiers to sponge cakes Cereal Chemistry 64; 222 wherein use of sucrose fatty acid emulsifier to sponge cake is described and they observed improvement of quality of sponge cakes.

Reference may be made here to Wootton et al, 1967 The role of emulsifiers in the incorporation of air into layer cake batter systems Cereal Chemistry 44: 333-343 wherein the role of emulsifiers in the incorporation of air into layer cake batter system is studied.

The most generally useful emulsifiers for the purpose of increasing the quality of cakes are those that have been termed as $\alpha$- tending emulsifier because they tend to solidify in stable alpha crystalline form.

Although many types of emulsifiers can function effectively in cakes, several are prominent because of excellent cost / performance value. In cake mixes, the most common emulsifier in 10-15%, PGME, based on, and incorporated into, the shortening, Monoglycerides and mixtures of lactated monglycerides with PGME also are used in cake mixes. (David. Rusch.T., 1981. Emulsifiers: Uses in Cereal and bakery food 26(3): 111-115).

Reference may be made here to Del Vecchio. 1975. Emulsifiers and their use in soft wheat products. The Bakers Digest 52: 28-35, wherein the use of combination of emulsifiers like distilled monoglyceride, sorbitan monostearate, glycerol lactopalmitate and stearoyl-2-lactylic acid is described. In all cakes, volumes improved. Glycerol lactopalmitate and sorbitan monostearate produced an almost linear increase in cake volume as the level of emulsifier increased.

Reference may be made here to Seiden and Mishkin, Martin. A.,US Patent NO.4680184 (1987) wherein a emulsifier formulation is made for cookies. The formulation consists of 40% to about 90% by weight of the composition, on the basis of monoglyceride content, fatty acid mono-glycerides having from about 35% to about 99% fatty acid mononglycerides and from about 1% to about 50% fatty acid diglycerides, wherein at least about 65% of said fatty acid consisting of $C_{14}$ - $C_{20}$ saturated fatty acid and $C_{16}$ - $C_{20}$ trans-unsaturated fatty acids and mixture thereof: The emulsifier system is meant particularly for the dual-textured cookies or drop cookies. The emulsifier system improved the texture, flavour, mouthfeel, taste and appearance and appearance of cookies. The drawback of the process is that process is that the emulsifier system is meant for cookies, the main product characteristic being crisp texture where as the present invention of emulsifier system is for cakes the product being characterised by soft, moist texture.

Reference may be made here to Tanaka et al US Patent No. 5178897 (1993) wherein the invention relates to a water -in-oil emulsion composition for bakery. It particularly relates to a water-in-oil emulsion composition for bakery wherein an extremely high emulsion stability and a high proportion of aqueous phase can be achieved, capable of giving a product having an excellent flavour, a soft texture and a good meltability in mouth when used in particularly baked products. Though other emulsifiers are used, the particularly preferred are monoglycerides, diacetyltartaric acid monoglyceride, succinic acid and polyglycerol fattyacid esters. The aqueous phase of the emulsion composition of a high water content may further contain dairy products, common salt, sugars, puree or juice of fruits or vegetables, concentrates thereof and lactic acid fermentation products thereof as seasoning components, if required. The drawback is that the emulsion composition has a high water content whereas the present invention the emulsion composition is entirely a shortening based one.

Reference may be made here to Setser US Patent No. 5534285 (1996) wherein the process is concerned with reduced calorie, organoleptically acceptable cake products wherein substantial reductions in high calorie cake ingredients ( e.g. shortening and sugar) are possible through incorporation of relatively minor amounts of expanded liquid or gel mesophase emulsifiers into the cake batters. More particularly it is concerned with such cakes, and the starting batters wherein sweetening agents is reduced to a maximum of about 50%. Shortening is substantially, if not entirely eliminated through use of an appropriate emulsifier system. A

A variety of bulking agents such as polydextrose, sorbitol, maltitol, lactitol can be used to give appropriate structure to the final cakes. The drawback of the process is that the surfactant system invented is meant for low calorie cakes wherein the quantity of sugar and fat is reduced in the formulation and also bulking agents are added to give the structure whereas the present invention relates to the use of emulsifier system in cakes to improve the quality. The composition and the methodology of preparation of the emulsifier system are different.

Reference may be made here to Yuan US Patent No. 6017388(2000) wherein a method of producing starch emulsifier composition by heating a starch in the presence of an emulsifier to form a elastic textured paste is described. The starch-emulsifier composition produced are useful in a variety of food and beverage applications like stabilisation of foam in ice cream, fat replacer in a variety of reduced- fat and fat-free foods such as cakes, pudding, sauces, margarine, cream cheese, yoghurt , fudge and other confections, cheeses and as a shortening in baked goods such as pies, cookies, breads, cakes, noodles, crackers and pretzels. The drawback is that the starch-emulsifier system is water based and not shortening based.

## OBJECTS OF THE INVENTION

The main object of the present invention is to provide an shortening based emulsifier system for cakes and a method of preparation.

An object of the present invention is to provide the utilization of emulsifier system in cake preparation.

## SUMMARY OF THE INVENTION

The present invention provides a shortening based emulsifying system for cakes and a method of preparation of said emulsifying system.

## DETAILED DESCRIPTION OF THE INVENTION

Accordingly, the present invention provides shortening based emulsifying formulation for making improved quality cakes said formulation comprising

(a) distilled gylcerol monostearate (DGMS) 10.6 parts;
(b) sodium stearoyl -2-lactylate (SSL) 0.4 parts;
(c) sorbitan monostearate (SMS) 5.3 parts;
(d) poly glycerol monostearate (PGMS) 16 parts;
(e) polysorbate (PS-60) 2.5 parts; and
(f) shortening agent 100 parts.

An embodiment of the present invention, wherein the pH of the emulsifying agent is neutral.

Another embodiment of the present invention, wherein the preferable shortening agent is hydrogenated vegetable oil.

The present invention also provides a method for the preparation of shortening based emulsifying formulation, said method comprising the steps of:

(a) mixing of distilled gylcerol monostearate (DGMS) 10.6 parts, sodium stearoyl-2-lactylate (SSL) 0.4 parts, sorbitan monosteareate (SMS) 5.3 parts, poly glycerol monostearate (PGMS) 16 parts, polysorbate (PS-60) 2.5 parts and shortening agent 100 parts;
(b) melting of the above emulsifiers at 60°C ;
(c) adding glycerol 6.6 parts, lactic acid 0.6 parts and shortening agent 100 parts to the above melted emulsifier mixture;
(d) stirring the emulsifier mixture till the mixture is homogeneous; and
(e) adjusting the pH of emulsifier formulation to neutral to obtain shortening based emulsifying formulation.

An embodiment of the present invention, wherein cake made of said emulsifying formulation having batter density lowered by 13.82%.

Yet another embodiment of the present invention, a method wherein said emulsifying formulation is used to make cakes with a decrease in batter density and an increase in fine, uniform and evenly distributed air cells.

Still another embodiment of the present invention, a method wherein said emulsifying formulation is used to make cakes with an increased specific loaf volume and a decreased shear force.

Yet another embodiment of the present invention, a method wherein said emulsifying formulation is used to make cakes with an increased crumb cell characteristic having a uniform fine cell with thin cell wall.

Further embodiment of the present invention, a method wherein said emulsifying formulation is used to make cakes having textural characteristics selected from optimum moistness, tenderness and softness.

Yet another embodiment of the present invention, a method wherein said formulation is used to make cakes with clean mouth feel, typical taste and aroma.

The present invention is further explained in the form of the following embodiments.

## Method for individual emulsifier preparation

The individual emulsifier (DGMS, PGMS, SSL, PS-60 and SMS) are prepared in emulsifier ratio of 1:4 shortening by melting the emulsifier, adding shortening while stirring and adjusting pH to neutral.

**Bar Cake Formulation**

| | g |
|---|---|
| Wheat flour | 100 |
| Crystal sugar | 90 - 110 |
| Egg | 115-125 |
| Shortening | 62-70 |
| Calcium propionate | 0.3-0.5 |
| Baking powder | 0.3-0.5 |
| Salt | 0.3-0.5 |
| Acetic acid | 0.1-0.25 |
| Water | 5-15 ml |
| Essence | |
| Lemon | 2-2.5 ml |
| Vanilla | 2-2.5 ml |
| Emulsifier/Developed emulsifier formulation | 2-3 / 4-6 |

- Along with flour calcium propionate, baking powder and salt are sifted
- Fat and flour are mixed for 5min in III speed in mixer
- Egg, crystal sugar and emulsifier /developed emulsifier formulation is whipped for 5-6 min in III speed
- The egg mixture is transferred to fat-flour mixture in three parts while mixing for 3 min at I speed till homogeneous
- Finally essence, water and acetic acid are added and mixed at I speed for 1 min
- 425 g batter is scaled and the cake is baked at 180°C for 1 h

**Flow sheet for the preparation of bar cake**

Weighing of the ingredients

↓

Sifting calcium propionate, baking powder, salt and flour

↓

Beating of fat and flour for 5 min in III speed

↓

Whipping of egg, crystal sugar and emulsifier / developed emulsifier formulation for 5-6 min in III speed

↓

Addition of egg mixture to fat-flour mixture in three parts while mixing for 3 min at I speed

↓

Addition of essence, water and acetic acid and mixing at I speed for 1 min

↓

Scaling of 425 g batter and baking at 180° C for 1 h.

**Evaluation of cake batter and cakes:**

*a) Evaluation of cake batters:*

**1. Batter density-** The batter density of different batters containing individual emulsifier and emulsifier formulation is calculated by:

$$\text{Batter density (g/cc)} \quad = \quad \frac{\text{Weight of batter}}{\text{Volume of container}}$$

**2. Microscopic examination-** Cake batters prepared with different individual emulsifier and developed emulsifier formulation along with control are examined under Phase Contrast Microscope (Olympus Model BX 40) magnification 10X for incorporation of air cells.

*b) Evaluation of cake:*

**1. Volume:** The volume is measured by the rape seed displacement method.
**2. Specific volume of cake:** Volume of cake is taken and weight is noted.
Ratio of volume to weight gives the specific volume:

$$\text{Specific volume (ml/g)} = \frac{\text{Volume in ml}}{\text{Weight of the cake in g}}$$

**3. Sensory evaluation:** The bar cake is evaluated by a panel of judges. The score card for evaluation is given below:

**Score card for sensory evaluation of cake.**

| Parameter | Score |
|---|---|
| 1. Crust colour | Pale brown, Golden brown, dark brown |
| 2. Crumb cells<br>  a. Uniformity<br>    b. Size<br>c. Cell wall thickness | <br>10<br>10<br>10 |
| 3. Grain | 20 |
| 4. Texture<br>  a. Moistness<br>  b. Tenderness<br>   c. Softness | <br>10<br>10<br>20 |
| 5. Crumb colour | 10 |
| 6. Flavour | 10 |
| Total | 110 |

d. *Texture studies:* Texture studies are carried out using "Texture Analyser" ( Stable Micro Formulation). Four samples of 1-inch thickness of cake are used for recording texture. The set parameters of the instrument are: speed of plunger -100 mm/min and load cell-5 Kg. Force required to bring 25% compression is recorded and average of 4 values is taken.

**Example 1**

*Bar Cake Formulation*

| | g |
|---|---|
| Wheat flour | 100 |
| Crystal sugar | 100 |
| Egg | 120 |
| Shortening | 66 |
| Calcium propionate | 0.5 |
| Baking powder | 0.5 |
| Salt | 0.5 |
| Acetic acid | 0.2 |
| Water | 10 |

(continued)

|  | g |  |
|---|---|---|
| Essence | | |
| Lemon | 2.5 ml | |
| Vanilla | 2.5 ml | |

- Along with flour calcium propionate, baking powder and salt are sifted
- Fat and flour are mixed for 5min in III speed in mixer
- Egg, crystal sugar and emulsifier /developed emulsifier formulation is whipped for 5-6 min in III speed
- The egg mixture is transferred to fat-flour mixture in three parts while mixing for 3 min at I speed till homogeneous
- Finally essence, water and acetic acid are added and mixed at I speed for 1 min
- 425 g batter is scaled and the cake is baked at 180°C for 1 h

The physical characteristics of the cake are as follows: cake weight 375.10 g; volume 1200 cc; specific loaf volume 3.19 ml/g; batter density 0.94 g/cc and texture 1636.0 g. The overall sensory score is 85 out of 110.

**Example 2**

***Bar Cake Formulation***

|  | g |  |
|---|---|---|
| Wheat flour | 100 | |
| Crystal sugar | 100 | |
| Egg | 120 | |
| Shortening | 66 | |
| Calcium propionate | 0.5 | |
| Baking powder | 0.5 | |
| Salt | 0.5 | |
| Acetic acid | 0.2 | |
| Water | 10 | |
| Essence | | |
| Lemon | 2.5 ml | |
| Vanilla | 2.5 ml | |
| Emulsifier (DGMS) | 2.5 | |

- Along with flour calcium propionate, baking powder and salt are sifted
- Fat and flour are mixed for 5min in III speed in mixer
- Egg, crystal sugar and emulsifier /developed emulsifier formulation is whipped for 5-6 min in III speed
- The egg mixture is transferred to fat-flour mixture in three parts while mixing for 3 min at I speed till homogeneous
- Finally essence, water and acetic acid are added and mixed at I speed for 1 min
- 425 g batter is scaled and the cake is baked at 180°C for 1 h

The physical characteristics of the cake are as follows: cake weight 375.50 g; volume 1350 cc; specific loaf volume 3.59 ml/g; batter density 0.87 g/cc and texture 1157.5 g. The overall sensory score is 91 out of 110.

**Example 3**

***Bar Cake Formulation***

|  | g |
| --- | --- |
| Wheat flour | 100 |
| Crystal sugar | 100 |
| Egg | 120 |
| Shortening | 66 |
| Calcium propionate | 0.5 |
| Baking powder | 0.5 |
| Salt | 0.5 |
| Acetic acid | 0.2 |
| Water | 10 |
| Essence | |
| Lemon | 2.5 ml |
| Vanilla | 2.5 ml |
| Emulsifier (SMS) | 2.5 |

- Along with flour calcium propionate, baking powder and salt are sifted
- Fat and flour are mixed for 5min in III speed in mixer
- Egg, crystal sugar and emulsifier /developed emulsifier formulation is whipped for 5-6 min in III speed
- The egg mixture is transferred to fat-flour mixture in three parts while mixing for 3 min at I speed till homogeneous
- Finally essence, water and acetic acid are added and mixed at I speed for 1 min
- 425 g batter is scaled and the cake is baked at 180°C for 1 h

The physical characteristics of the cake are as follows: cake weight 376.20 g; volume 1250 cc; specific loaf volume 3.32 ml/g; batter density 0.89g/cc and texture 1187.2 g. The overall sensory score is 87.5 out of 110.

**Example 4**

***Bar Cake Formulation***

|  | g |
| --- | --- |
| Wheat flour | 100 |
| Crystal sugar | 100 |
| Egg | 120 |
| Shortening | 66 |
| Calcium propionate | 0.5 |
| Baking powder | 0.5 |
| Salt | 0.5 |
| Acetic acid | 0.2 |
| Water | 10 |
| Essence | |
| Lemon | 2.5 ml |
| Vanilla | 2.5 ml |
| Emulsifier (PGMS) | 2.5 |

- Along with flour calcium propionate, baking powder and salt are sifted
- Fat and flour are mixed for 5min in III speed in mixer.
- Egg, crystal sugar and emulsifier /developed emulsifier formulation is whipped for 5-6 min in III speed.
- The egg mixture is transferred to fat-flour mixture in three parts while mixing for 3 min at I speed till homogeneous.
- Finally essence, water and acetic acid are added and mixed at I speed for 1 min.
- 425 g batter is scaled and the cake is baked at 180°C for 1 h.

The physical characteristics of the cake are as follows: cake weight 375.80g; volume 1300 cc; specific loaf volume 3.45 ml/g; batter density 0.88 g/cc and texture 1187.2 g. The overall sensory score is 85 out of 110.

**Example 5**

***Bar Cake Formulation***

|  | g |
|---|---|
| Wheat flour | 100 |
| Crystal sugar | 100 |
| Egg | 120 |
| Shortening | 66 |
| Calcium propionate | 0.5 |
| Baking powder | 0.5 |
| Salt | 0.5 |
| Acetic acid | 0.2 |
| Water | 10 |
| Essence | |
| Lemon | 2.5 ml |
| Vanilla | 2.5 ml |
| Emulsifier (SSL) | 2.5 |

- Along with flour calcium propionate, baking powder and salt are sifted
- Fat and flour are mixed for 5min in III speed in mixer
- Egg, crystal sugar and emulsifier /developed emulsifier formulation is whipped for 5-6 min in III speed
- The egg mixture is transferred to fat-flour mixture in three parts while mixing for 3 min at I speed till homogeneous
- Finally essence, water and acetic acid are added and mixed at I speed for 1 min
- 425 g batter is scaled and the cake is baked at 180°C for 1 h

The physical characteristics of the cake are as follows: cake weight 376.4 g; volume 1375 cc; specific loaf volume 3.65 ml/g; batter density 0.88 g/cc and texture 1035 g. The overall sensory score is 92 out of 110.

**Example 6**

***Bar Cake Formulation***

|  | g |
|---|---|
| Wheat flour | 100 |
| Crystal sugar | 100 |
| Egg | 120 |
| Shortening | 66 |
| Calcium propionate | 0.5 |
| Baking powder | 0.5 |
| Salt | 0.5 |
| Acetic acid | 0.2 |
| Water | 10 |
| Essence | |
| Lemon | 2.5 ml |
| Vanilla | 2.5 ml |
| Emulsifier (PS-60) | 2.5 |

- Along with flour calcium propionate, baking powder and salt are sifted
- Fat and flour are mixed for 5min in III speed in mixer
- Egg, crystal sugar and emulsifier /developed emulsifier formulation is whipped for 5-6 min in III speed
- The egg mixture is transferred to fat-flour mixture in three parts while mixing for 3 min at I speed till homogeneous
- Finally essence, water and acetic acid are added and mixed at I speed for 1 min
- 425 g batter is scaled and the cake is baked at 180°C for 1 h

The physical characteristics of the cake are as follows: cake weight 376.5g; volume 1390 cc; specific loaf volume 3.69 ml/g; batter density 0.87 g/cc and texture 1010 g. The overall sensory score is 87.5 out of 110.

**Example 7**

*Bar Cake Formulation*

|  | g |
|---|---|
| Wheat flour | 100 |
| Crystal sugar | 100 |
| Egg | 120 |
| Shortening | 66 |
| Calcium propionate | 0.5 |
| Baking powder | 0.5 |
| Salt | 0.5 |
| Acetic acid | 0.2 |
| Water | 10 |
| Essence | |
| Lemon | 2.5 ml |
| Vanilla | 2.5 ml |
| Developed emulsifier formulation | 5.0 |

- Along with flour, calcium propionate, baking powder and salt are sifted
- Fat and flour are mixed for 5min in III speed in mixer
- Egg, crystal sugar and emulsifier /developed emulsifier formulation is whipped for 5-6 min in III speed
- The egg mixture is transferred to fat-flour mixture in three parts while mixing for 3 min at I speed till homogeneous
- Finally essence, water and acetic acid are added and mixed at I speed for 1 min
- 425 g batter is scaled and the cake is baked at 180°C for 1 h

The physical characteristics of the cake are as follows: cake weight 382.5g; volume 1695 cc; specific loaf volume 4.43 ml/g; batter density 0.81 g/cc and texture 750g. The overall sensory score is 102 out of 110. The data on the effect of individual emulsifiers and developed emulsifier formulation on the physical and sensory characteristics of bar cake are presented in Table 1 and Table 2.

**Table 1 Effect of individual emulsifier and developed emulsifier system on the physical characteristics of bar cake**

|  | Weight (g) | Volume (cc) | Specific loaf Volume (cc/g) | Batter density (g/cc) | Texture* (g, force) |
|---|---|---|---|---|---|
| **Example 1 (Control)** | 375.10 | 1200 | 3.19 | 0.94 | 1636.9 |
| **Example 2 (DGMS)** | 375.50 | 1350 | 3.46 | 0.87 | 1157.5 |
| **Example 3 (SMS)** | 376.20 | 1250 | 3.32 | 0.89 | 1187.2 |

(continued)

| | Weight (g) | Volume (cc) | Specific loaf Volume (cc/g) | Batter density (g/cc) | Texture* (g, force) |
|---|---|---|---|---|---|
| **Example 4 (PGMS)** | 375.80 | 1300 | 3.45 | 0.88 | 1165.2 |
| **Example 5 (SSL)** | 376.40 | 1375 | 3.65 | 0.88 | 1035.0 |
| **Example 6 (PS-60)** | 376.50 | 1390 | 3.69 | 0.87 | 1010.0 |
| **Example 7 (Developed Emulsifier system)** | 382.5 | 1695 | 4.43 | 0.81 | 750.0 |
| *• Force required for 25% compression measured using texture analyzer.* | | | | | |

**TABLE 2 Effect of individual emulsifier and developed emulsifier system on the sensory characteristics of cakes**

| | Crust Colour | Crumb Cell | | | Grain (20) | Texture | | | Crumb Color | Flavour (10) | Total Score (110) |
|---|---|---|---|---|---|---|---|---|---|---|---|
| | | Uniformity (10) | Size (10) | Cell wall (10) | | Moistness (10) | Tenderness (10) | Softness (20) | | | |
| Example 1 (Control) | Golden Brown | 7.5 | 6.0 | 6.0 | 16.5 | 5.5 | 6.5 | 16.0 | 7.5 | 9.0 | 8.5 |
| Example 2 (DGMS) | Golden Brown | 7.5 | 8.0 | 8.5 | 18.0 | 8.0 | 8.0 | 18.0 | 9.0 | 9.0 | 94 |
| Example 3 (SMS) | Golden Brown | 8.0 | 8.5 | 7.0 | 16.5 | 7.0 | 6.0 | 17.0 | 8.5 | 9.0 | 87.5 |
| Example 4 (PGMS) | Golden Brown | 7.0 | 8.0 | 8.5 | 17.5 | 7.0 | 7.0 | 17.0 | 8.5 | 9.0 | 89.5 |
| Example 5 (SSL) | Golden Brown | 8.0 | 8.0 | 8.0 | 18.0 | 8.0 | 8.0 | 18.0 | 8.0 | 8.0 | 92.0 |
| Example 6 (PS-60) | Golden Brown | 7.5 | 7 | 7.5 | 17.0 | 7.5 | 8.0 | 17.5 | 7.5 | 8.0 | 87.5 |
| Example 7 (Developed emulsifier system) | Golden Brown | 9.0 | 9.5 | 9.5 | 19.0 | 9.0 | 9.0 | 19.0 | 9.0 | 9.0 | 102.0 |

The evaluation of cake batters for batter density showed that the emulsifiers decreased the batter density when compared with the control. However, the batter with developed emulsifier formulation had a batter density of 0.81 g/cc as against the control batter density of 0.94 g/cc indicating good air incorporation resulting in a light fluffy batter.

Photomicrographs of cake batters with different emulsifiers showed an increase in the number of air bubbles when compared to the control. The cake batter with developed emulsifier formulation gave the best result. The photomicrograph showed a more pronounced increase in the number of air bubbles in fat phase. The bubbles are of uniform size and evenly distributed in the batter.

All the emulsifiers brought about an increase in specific loaf volume of cakes. Among the emulsifiers, cakes with PS-60 showed a maximum increase in specific cake volume followed by SSL, DGMS and PGMS. The cakes prepared with developed emulsifier formulation recorded highest specific loaf volume than the cakes with emulsifiers alone (Table 1).

The individual emulsifiers improved the texture and overall quality of cakes as reflected in total score values when compared with the control. The cake containing the developed emulsifier formulation is rated the best as it had a golden brown crust colour, fine crumb grain, uniform cells with thin cell walls (Table 2). The force required for 25% compression is lowest i.e. 750 g indicating a very soft texture. The cakes are tender with a moist mouthfeel. The cakes containing developed emulsifier formulation are better in all the quality characteristics when compared with cakes prepared with individual emulsifiers.

## Claims

1.    Shortening based emulsifying formulation for making improved quality cakes said formulation comprising:

   (a) distilled gylcerol monostearate (DGMS) 10.6 parts;
   (b) sodium stearoyl-2-lactylate (SSL) 0.4 parts;
   (c) sorbitanmonosteareate (SMS) 5.3 parts;
   (d) poly glycerol monostearate (PGMS) 16 parts;
   (e) polysorbate (PS-60) 2.5 parts; and
   (f) shortening agent 100 parts.

2.    An emulsifying formulation according to claim 1, wherein the pH of the emulsifying agent is neutral.

3.    An emulsifying formulation according to claim 1, the preferable shortening agent is hydrogenated vegetable oil.

4.    A method for the preparation of shortening based emulsifying formulation, said method comprising the steps of:

   (a) mixing of distilled gylcerol monostearate (DGMS) 10.6 parts, sodium stearoyl-2- lactylate (SSL) 0.4 parts, sorbitanmonosteareate (SMS) 5.3 parts, poly glycerol monostearate (PGMS) 16 parts, polysorbate (PS-60) 2.5 parts and shortening agent 100 parts;
   (b) melting of the above emulsifiersat 60 C ;
   (c) adding glycerol 6.6 parts, lactic acid 0.6 parts and shortening agent 100 parts to the above melted emulsifier mixture;
   (d) stirring the emulsifier mixture till the mixture is homogeneous; and
   (e) adjusting the pH of emulsifier formulation to neutral to obtain shortening based emulsifying formulation.

5.    Use of an emulsifying formulation according to any one of claims 1 to 3 in the manufacture of cakes with a decrease in batter density and an increase in fine, uniform and evenly distributed air cells.

6.    Use of an emulsifying formulation according to any one of claims 1 to 3 in the manufacture of cakes having batter density lowered by 13.82%.

7.    Use of an emulsifying formulation according to any one of claims 1 to 3 in the manufacture of cakes with an increased specific loaf volume and a decreased shear force.

8.    Use of an emulsifying formulation according to any one of claims 1 to 3 in the manufacture of cakes with an increased crumb cell characteristic having a uniform fine cell with thin cell wall.

9.    Use of an emulsifying formulation according to any one of claims 1 to 3 in the manufacture of cakes having textural characteristics selected from optimum moistness, tenderness and softness.

10. Use of an emulsifying formulation according to any one of claims 1 to 3 in the manufacture of cakes with clean mouth feel, typical taste and aroma.

**Patentansprüche**

1. Emulgierformulierung auf Shorteningbasis zur Herstellung von Kuchen mit verbesserter Qualität, wobei die Formulierung

   (a) 10,6 Teile destilliertes Glycerinmonostearat (DGMS),
   (b) 0,4 Teile Natriumstearoyl-2-lactylat (SSL),
   (c) 5,3 Teile Sorbitanmonostearat (SMS),
   (d) 16 Teile Polyglycerinmonostearat (PGMS),
   (e) 2,5 Teile Polysorbat (PS-60) und
   (f) 100 Teile Shorteningmittel

   umfasst.

2. Emulgierformulierung nach Anspruch 1, wobei der pH des Emulgiermittels neutral ist.

3. Emulgierformulierung nach Anspruch 1, wobei das bevorzugte Shorteningmittel hydriertes Pflanzenöl ist.

4. Verfahren für die Herstellung einer Emulgierformulierung auf Shorteningbasis, wobei das Verfahren die Schritte

   (a) des Mischens von 10,6 Teilen destilliertes Glycerinmonostearat (DGMS), 0,4 Teilen Natriumstearoyl-2-lactylat (SSL), 5,3 Teilen Sorbitanmonostearat (SMS), 16 Teilen Polyglycerinmonostearat (PGMS), 2,5 Teilen Polysorbat (PS-60) und 100 Teilen Shorteningmittel,
   (b) des Schmelzens der vorstehenden Emulgatoren bei 60°C,
   (c) des Zugebens von 6,6 Teilen Glycerin, 0,6 Zeilen Milchsäure und 100 Teilen Shorteningmittel zu dem vorstehenden geschmolzenen Emulgatorgemisch,
   (d) des Rührens des Emulgatorgemisches, bis das Gemisch homogen ist, und
   (e) des Einstellens des pH der Emulgatorformulierung auf neutral, um eine Emulgierformulierung auf Shorteningbasis zu erhalten,

   umfasst.

5. Verwendung einer Emulgierformulierung nach einem der Ansprüche 1 bis 3 in der Herstellung von Kuchen mit einer Abnahme der Teigdichte und einer Zunahme der feinen, einheitlich und gleichmäßig verteilen Luftzellen.

6. Verwendung einer Emulgierformulierung nach einem der Ansprüche 1 bis 3 in der Herstellung von Kuchen mit einer um 13,82% verringerten Teigdichte.

7. Verwendung einer Emulgierformulierung nach einem der Ansprüche 1 bis 3 in der Herstellung von Kuchen mit einem vergrößerten spezifischen Laibvolumen und einer verringerten Scherkraft.

8. Verwendung einer Emulgierformulierung nach einem der Ansprüche 1 bis 3 in der Herstellung von Kuchen mit einer vergrößerten Krümelzelleneigenschaft mit einer einheitlichen Feinzelle mit dünner Zellwand.

9. Verwendung einer Emulgierformulierung nach einem der Ansprüche 1 bis 3 in der Herstellung von Kuchen mit Beschaffenheitseigenschaften, ausgewählt aus optimaler Feuchtigkeit, Zartheit und Weichheit.

10. Verwendung einer Emulgierformulierung nach einem der Ansprüche 1 bis 3 in der Herstellung von Kuchen mit sauberem Gefühl im Mund, typischem Geschmack und Aroma.

**Revendications**

1. Formulation émulsionnante à base de matière grasse culinaire pour préparer des pâtisseries de qualité améliorée, ladite formulation comprenant :

   (a) du monostéarate de glycérol distillé (DGMS) 10,6 parties ;
   (b) du stéaroyl-2-lactylate de sodium (SSL) 0,4 partie ;
   (c) du monostéarate de sorbitan (SMS) 5,3 parties ;
   (d) du monostéarate de polyglycérol (PGMS) 16 parties ;
   (e) du polysorbate (PS-60) 2,5 parties ; et
   (f) un agent de matière grasse culinaire 100 parties.

2. Formulation émulsionnante selon la revendication 1, dans laquelle le pH de l'agent émulsionnant est neutre.

3. Formulation émulsionnante selon la revendication 1, l'agent de matière grasse culinaire préféré étant une huile végétale hydrogénée.

4. Procédé de préparation d'une formulation émulsionnante à base de matière grasse culinaire, ledit procédé comprenant les étapes consistant à :

   (a) mélanger du monostéarate de glycérol distillé (DGMS) 10,6 parties, du stéaroyl-2-lactylate de sodium (SSL) 0,4 partie, du monostéarate de sorbitan (SMS) 5,3 parties, du monostéarate de polyglycérol (PGMS) 16 parties, du polysorbate (PS-60) 2,5 parties et un agent de matière grasse culinaire 100 parties ;
   (b) faire fondre à 60 °C le mélange émulsionnant ci-dessus ;
   (c) ajouter du glycérol, 6,6 parties, de l'acide lactique, 0,6 partie et de l'agent de matière grasse culinaire, 100 parties, au mélange émulsionnant fondu ci-dessus ;
   (d) agiter le mélange émulsionnant jusqu'à ce que le mélange soit homogène ; et
   (e) ajuster le pH de la formulation émulsionnante à neutralité pour obtenir une formulation émulsionnante à base de matière grasse culinaire.

5. Utilisation d'une formulation émulsionnante selon l'une quelconque des revendications 1 à 3 dans la préparation de pâtisseries présentant une diminution de la densité en pâte lisse et une augmentation des cellules d'air réparties de manière fine, uniforme et régulière.

6. Utilisation d'une formulation émulsionnante selon l'une quelconque des revendications 1 à 3 dans la préparation de pâtisseries ayant une densité en pâte lisse réduite de 13,82 %.

7. Utilisation d'une formulation émulsionnante selon l'une quelconque des revendications 1 à 3 dans la préparation de pâtisseries ayant un volume spécifique en miche accru et une force de cisaillement réduite.

8. Utilisation d'une formulation émulsionnante selon l'une quelconque des revendications 1 à 3 dans la préparation de pâtisseries présentant une caractéristique cellulaire d'écrasement accrue ayant une cellule uniforme fine avec une paroi cellulaire mince.

9. Utilisation d'une formulation émulsionnante selon l'une quelconque des revendications 1 à 3 dans la préparation de pâtisseries ayant des caractéristiques de texture choisies parmi un moelleux, une tendreté et une souplesse optimales.

10. Utilisation d'une formulation émulsionnante selon l'une quelconque des revendications 1 à 3 dans la préparation de pâtisseries présentant une sensation en bouche propre, une saveur et un arôme typique.